# EUROPÄISCHE PATENTSCHRIFT

(11) **EP 1 747 366 B1**
(45) Veröffentlichungstag und Bekanntmachung des Hinweises auf die Patenterteilung: **06.04.2016**
(21) Anmeldenummer: 05748464.4
(22) Anmeldetag: 11.05.2005
(51) Int. Cl.: F02D 13/02

(54) **VERFAHREN ZUM BETRIEB EINES VERBRENNUNGSMOTORS SOWIE VERBRENNUNGSMOTOR ZUR AUSFÜHRUNG DES VERFAHRENS**
METHOD FOR OPERATING AN INTERNAL COMBUSTION ENGINE, AND INTERNAL COMBUSTION ENGINE FOR CARRYING OUT SAID METHOD
PROCEDE DE FONCTIONNEMENT D'UN MOTEUR A COMBUSTION INTERNE ET MOTEUR A COMBUSTION INTERNE DESTINE A LA MISE EN OEUVRE DU PROCEDE

(30) Priorität: 13.05.2004 DE 102004023590
(43) Veröffentlichungstag der Anmeldung: 31.01.2007
(73) Patentinhaber: AUDI AKTIENGESELLSCHAFT, 85045 Ingolstadt (DE)
(72) Erfinder: BUDACK, Ralf, 85057 Ingolstadt (DE); KUHN, Michael, 85122 Hitzhofen (DE); SONNER, Markus, 85092 Kösching (DE); DENGLER, Stefan, 85139 Wettstetten (DE)
(74) Vertreter: Mader, Wilfried
(86) Internationale Anmeldenummer: PCT/EP2005/005065
(87) Internationale Veröffentlichungsnummer: WO 2005/111400

(56) Entgegenhaltungen:
- EP-A- 0 319 956
- US-A- 4 651 684
- US-A1- 2004 089 278
- US-B1- 6 595 183

## Beschreibung

Die Erfindung betrifft ein Verfahren zum Betrieb eines Verbrennungsmotors sowie einen Verbrennungsmotor zur Ausführung des Verfahrens gemäß den Oberbegriffen der unabhängigen Patentansprüche.

Dem Ziel eines hohen Drehmomentes bei einem 4-Takt-Motor schon bei niedrigen und niedrigsten Drehzahlen steht eine zumindest teilweise schlechte Befüllung des Brennraums mit Frischgas entgegen. Insbesondere bei Motoren mit einer Abgasaufladung (Turbo-Motoren) kommt hinzu, dass der Turbolader für die geringen Massendurchsätze des Abgasstroms im unteren Drehzahlbereich nicht optimal ausgelegt werden kann. Die Befüllung des Brennraums vor dem Beginn einer Verdichtung setzt sich, wie an sich bekannt ist, aus einem Anteil unverbrannten Gemischs von Luft und Kraftstoff sowie einem Anteil verbrannten Gemischs zusammen. Der Anteil des verbrannten Gemisches kann je nach den motorischen Randbedingungen Größenordnungen von bis zu 10 % der Gesamtladungsmasse des Brennraumes betragen. Aufgrund der wesentlich höheren Temperatur des aus dem vorhergehenden Arbeitszyklus stammenden Restgases kann der volumetrische Anteil des verbrannten Gemischs noch deutlich größer als 10 % sein. Die Restgasmasse setzt sich zusammen aus folgenden Komponenten:
- das im Zylinder befindliche Restgas, das während der Überschneidungsphase von Einlass- und Auslassventil nicht ausgespült wird;
- das Restgas, das nach dem öffnen der Einlassventile aufgrund eines negativen Spülgefälles zwischen Zylinder und Ansaugbereich aus dem Zylinder in den Ansaugbereich des Motors transportiert wird und in der Ansaugphase wieder in den Zylinder gelangt;
- Restgas, das vor dem Schließen der Auslassventile aus dem Auslaßbereich des Motors wieder in den Zylinder zurückgeschoben wird.

Es ist bekannt, dass die Wahl des Schließzeitpunkts eines Einlassventils die Füllungs- und damit die Drehmomentcharakteristik eines Motors stärker beeinflusst als die anderen Steuerzeiten. Ein früher Schließzeitpunkt ist dabei als günstig für ein hohes Drehmoment im unteren Drehzahlbereich erkannt worden, wobei zu berücksichtigen ist, dass durch die Frühverschiebung des Einlasshubes auch für Überschneidung zwischen Ein- und Auslassventilen zunimmt, was zu einer Erhöhung des Restgasgehaltes und damit zu einer Senkung der Frischladungsmenge führen kann. Ein solches Beispiel ist aus der EP-0319956 bekannt.

Ferner ist bekannt, dass bei einer großen Ventilüberschneidung ein Teil des Ladungseinsatzes durch den Zylinder strömen kann, ohne an der Verbrennung teilzunehmen. Diese so genannten Spülverluste verschlechtern den effektiven Wirkungsgrad des Motors. Allerdings ist auch erkannt worden, dass neben diesen Nachteilen auch Vorteile auftreten können, da bei Volllast das Restgas weitgehend ausgeschieden wird, was in einer größeren Zylinderfüllung und einer höheren Leistung resultiert. Bei Teillast steigt der Restgasgehalt mit zunehmender Ventilüberschneidung, wodurch Ladungswechselarbeit und Stickoxidemission verringert werden können.

Aufgabe der vorliegenden Erfindung ist es, ein Verfahren zum Betrieb eines Verbrennungsmotors zu schaffen, mit dem bei vorzugsweise niedrigen Drehzahlen höhere Drehmomente erreicht werden können. Eine weitere Aufgabe der Erfindung besteht in der Schaffung eines Verbrennungsmotors zur Ausführung des Verfahrens.

Die Aufgaben werden erfindungsgemäß jeweils mit den Merkmalen der unabhängigen Patentansprüche gelöst.

Erfindungsgemäß wird bei dem neuen Verfahren zum Betrieb eines Verbrennungsmotors, welcher zumindest zwei mit Ein- und Auslassventilen versehene Zylinder aufweist, zur Erhöhung der Zylinderfüllung mit Frischgas im Bereich niedriger Drehzahlen bei einem Gaswechsel für zumindest einen Zylinder die Auslasseventzeit verkürzt und die Überschneidungsphase von Ein- und Auslassventilen verlängert, indem bei einem Gaswechsel für zumindest einen Zylinder eine Auslasseventzeit und eine Überschneidungsphase von Ein- und Auslasseventzeit gewählt wird, bei der das Auslassventil geschlossen wird, bevor der Druck auf der Auslassseite den Druck auf der Einlassseite übersteigt.

Das erfindungsgemäße Verfahren basiert auf der Erkenntnis, dass auf der Auslassseite eines Verbrennungsmotors zu bestimmten Zeiten hohe Druckamplituden auftreten, die bei einem konventionellen Gaswechselverfahren zu einem negativen Spülgefälle führen. Öffnet das Auslassventil eines Zylinders, dann strömt das Verbrennungsgas aufgrund des hohen Druckgefälles mit einem hohen Massenstrom in den Auslassbereich des Motors, d.h. den Abgaskrümmer. In diesem Bereich sind Drosselstellen vorhanden, so dass das Abgas nicht ausreichend schnell abströmen kann. Dadurch entstehen in dem Auslassbereich des Motors insgesamt und insbesondere vor den Auslassventilen anderer Zylinder hohe Drücke. Wenn die Auslasseventzeit verkürzt und gleichzeitig die Überschneidungsphase von Ein- und Auslasseventzeit verlängert wird, kann die Zylinderfüllung mit Frischgas erhöht werden, da dann ein positives Spülgefälle zur Vermeidung von Rückspülung und gleichzeitig eine aktive Ausspülung des Zylinders erreicht werden kann. Bei der erfindungsgemäßen Kombination einer Verkürzung der Auslasseventzeit und Verlängerung der Überschneidungsphase der zum gleichen Zylinder gehörenden Ein- und Auslassventile wird das Auslassventil zu einem Zeitpunkt geschlossen, bevor der Druck im Auslassseitenbereich des Motors sein Maximum erreicht hat.

Bei dem erfindungsgemäßen Verbrennungsmotor ist ein Steuermodul vorgesehen, welches zur Erhöhung der Zylinderfüllung mit Frischgas während des Gaswechsels die Auslasseventzeit verkürzt und die Überschneidungsphase der zum gleichen Zylinder gehörenden Ein- und Auslassventile verlängert.

Weiterbildungen der Erfindung sind den abhängigen Ansprüchen zu entnehmen.

Wenn die Auslasseventzeit und die Verlängerung der Überschneidungsphase lediglich in einem niedrigen Drehzahlbereich, vorzugsweise kleiner als 2500 1/min, erfolgt, können Nachteile eines derartigen Verfahrens bei höheren Drehzahlen aufgrund der gesteigerten Ladungswechselarbeit und Verschlechterung des Wirkungsgrades vermieden werden. Hiermit wird berücksichtigt, dass eine Drehmomenterhöhung speziell im unteren Drehzahlbereich wünschenswert ist, da der Motor üblicherweise auf Betriebspunkte im mittleren bis oberen Drehzahlbereich hin optimiert ist.

Wenn durch die Verkürzung der Auslasseventzeit eine Zündfolgetrennung der Zylinder realisiert wird, wird eine unerwünschte Kommunikation von Auslassdruckstößen verschiedener Zylinder unterbunden. Eine derartige Kommunikation kann sich negativ mit dem Gaswechselvorgang überlagern.

Bei einer weiteren Ausführungsform ist die Auslasseventzeit derart bemessen, dass das Auslassventil bei einem positiven Spülgefälle zwischen Ein- und Auslassseite des Zylinders schließt. Mit einem positiven Spülgefälle wird eine gute Ausspülung von Restgasvolumen aus dem vorhergegangenen Verbrennungszyklus bewirkt. Dies führt wiederum zu einer Erhöhung des Ladungsanteils des Zylinders mit Frischgas. Dementsprechend steigt die im Verbrennungsprozess gewonnene Leistung bzw. das Drehmoment.

Wenn der Verbrennungsmotor einen Abgas-Turbolader aufweist, ergibt sich auf der Einlassseite des Motors ein konstanterer Druck als bei einem frei ansaugenden Motor. Damit wird die Abstimmung der Druckverhältnisse zwischen Einlass- und Auslassseite im Hinblick auf ein optimiertes Spülgefälle erleichtert.

Das Verfahren ermöglicht es, einen erhöhten Abgasdruck auf der Auslassseite des Zylinders vorzusehen und damit bei einem Motor mit Abgas-Turbolader eine höhere Antriebsleistung der Turbine zu erreichen. Dies wiederum führt zu einer erhöhten Zylinderfüllung und entsprechend erhöhter Leistung bzw. Drehmoment.

Insbesondere ist vorgesehen, dass der nach Schließung des Auslassventils auftretende erhöhte Druck auf der Auslassseite des Zylinders zur Erhöhung des vom Abgas-Turbolader erzeugten Ladedrucks auf der Einlassseite herangezogen wird.

Bevorzugt ist eine Auslasseventzeit, die nicht wesentlich länger als der Zündabstand der einzelnen Zylinder ist und damit z.B. bei einem R4-Motor ca. 180°KW betragen sollte. Bei V-Motoren mit ungleichmäßigen Zündabständen auf einer Zylinderbank können, abweichend von der beschriebenen Regel, zylinderindividuelle Eventlängen und Überschneidungen der Auslasssteuerzeiten untereinander notwendig sein.

Ferner hat sich herausgestellt, dass eine Überschneidungsphase der Ein- und Auslassventile eines Zylinders mit einer Länge zwischen 5 und 30°KW bezogen auf einen Ventilhub von 1 mm günstig ist. Eine derartige Überschneidungsphase führt zu einem ausreichend großen Zeitfenster, in dem das positive Spülgefälle wirksam werden kann.

Im Teillastbereich ergibt sich aufgrund der großen Ventilüberschneidung zwischen Ein- und Auslassventilen eines Zylinders eine Erhöhung des Restgasgehaltes durch interne Abgasrückführung, die ihrerseits in unteren und mittleren Lastbereichen zu einer Entdrosselung und damit Verbrauchsverbesserung führt. Ein zusätzliches Verbrauchspotenzial kann sich je nach Konfiguration durch die systemimmanente Spätverstellung des Öffnens der Auslassventile und die damit verbundene effizientere Nutzung der Expansionsarbeit ergeben.

Indem durch die Erhöhung der Zylinderfüllung mit Frischgas der Verbrennungsmotor mit einer um etwa 50 K reduzierten Ladungstemperatur betrieben wird, kann der volumetrische Füllungsgrad des Zylinders erhöht werden.

Ferner kann durch die Erhöhung des Frischgasanteils die Temperatur bei Verdichtungsende abgesenkt und damit die Klopfgrenze des Verbrennungsmotors positiv beeinflusst werden. Gleichermaßen wirkt sich die Reduktion des Restgasgehaltes aus, durch die sowohl die Zündverzugszeit gesenkt als auch die Durchbrenngeschwindigkeit erhöht wird.

Zweckmäßigerweise erfolgt die Steuerung der Auslassventilen mittel einer Nockenwelle, die Verkürzung der Auslasseventzeit sowie die Verlängerung der Überschneidungsphase mittels eines zugeordneten Auslassnockenwellenprofils.

Zweckmäßige Werte des Öffnungsbeginns zur Verlängerung der Überschneidungsphase in der Volllast bei niedrigen Drehzahlen beinhalten einen um 30 ± 5°KW früheren Öffnungsbeginn der Einlassventile gegenüber einem konventionellen Verfahren.

Weitere Ausführungsformen, Aspekte und Vorteile der Erfindung sind unabhängig von ihrer Zusammenfassung in den Ansprüchen ohne Beschränkung der Allgemeinheit der nachfolgenden detaillierten Darstellung anhand von Zeichnungen zu entnehmen.

Es zeigen
- Figur 1: eine schematische Darstellung eines erfindungsgemäßen Verbrennungsmotors;
- Figur 2: eine Darstellung der Druckverläufe von dem Einlass- und dem Auslassbereich eines konventionellen turbo-aufgeladenen Motors;
- Figur 3: eine aufgespreizte Darstellung eines Bereichs der Figur 2;
- Figur 4: Druckverläufe im Einlass- und Auslassbereich eines erfindungsgemäßen Motors im Vergleich zu einem konventionellen' Motor;
- Figur 5: eine aufgespreizte Darstellung eines Bereichs der Figur 4;
- Figur 6: eine Nockenwelle mit einem erfindungsgemäßen Profil zur Ausführung des erfindungsgemäßen Verfahrens;
- Figur 7: Steuerzeiten eines konventionellen und eines erfindungsgemäßen Verfahrens zum Betrieb eines Verbrennungsmotors.

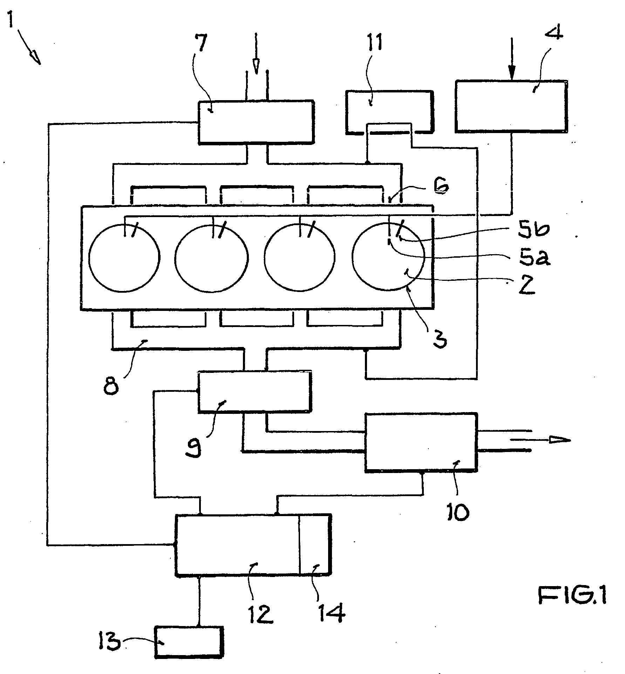

In Figur 1 ist eine schematische Darstellung eines erfindungsgemäßen turbo-aufgeladenen 4-Zylinder-Verbrennungsmotors 1 zu erkennen. In einem Brennraum 2 eines Zylinders 3 kann Kraftstoff durch eine Kraftstoffzuführung 4 eingebracht werden, was durch einen Pfeil an der Kraftstoffzuführung 4 angedeutet ist. Jeder Zylinder weist ein Einlassventil 5 a und ein Auslassventil 5 b auf.

Die Gemischzuführung erfolgt über eine Gemischzuführungseinrichtung 6. Im Einlassbereich des Verbrennungsmotors 1 ist ein Luftverdichter 7 vorgesehen. Die Luftzufuhr ist durch einen Pfeil am Luftverdichter 7 symbolisiert. Die Abgasvorrichtung 8 weist eine vom Abgas betreibbare Abgasturbine 9 auf. Es versteht sich, dass die Erfindung auch grundsätzlich bei einem Verbrennungsmotor ohne Abgasaufladung verwirklichbar ist. Ferner ist eine Katalysatoreinrichtung 10 in der Abgasvorrichtung 8 vorgesehen. Die Zusammensetzung des Verbrennungsgemischs kann durch eine Abgasrückführeinrichtung 11 beeinflusst werden. Die verschiedenen Motorfunktionen werden durch ein Vorsteuergerät 12 gesteuert bzw. geregelt, welches Signale von Sensoren 13 für Drehzahl, Motortemperatur, Katalysatortemperatur, einer Drosselklappenstellung sowie von Last- oder Leistungsanforderungen erhält. Das Steuergerät 12 umfasst ein Steuermodul 14, mit dem die Einlass- und Auslassventile bzw. die Einlass- und Auslasseventzeiten gesteuert werden können.

Das erfindungsgemäße Verfahren ermöglicht es, insbesondere bei niedrigeren Drehzahlen die Zylinderladung deutlich anzuheben. Erfindungsgemäß wird der Restgasgehalt reduziert und die Frischladungsmasse gesteigert. Die im Zylinder vorhandene Restgasmasse setzt sich aus dem während einer Ventilüberschneidungsphase durch Einlass- und Auslassventil durchgespülten Restgas, dem nach Öffnen der Einlassventile aufgrund eines negativen Spülgefälles zwischen Zylinder und Ansaugseite aus dem Zylinder in die Ansaugseite transportiertem Restgas, welches in der Ansaugphase wieder in den Zylinder gelangt, und dem Restgas, das kurz vor dem Schließen der Auslassventile aus der Auslassseite wieder in den Zylinder zurückgeschoben wird, zusammen. Der Restgasgehalt ist im allgemeinen umso geringer, je größer die Druckdifferenz (Spülgefälle) zwischen Einlass- und Auslassseite des Motors ist.

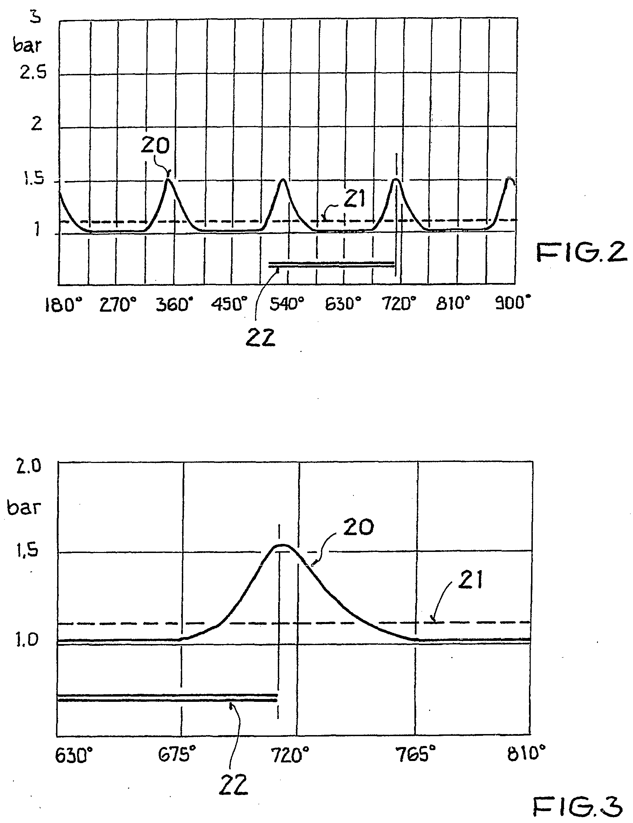

In Figur 2 ist eine schematische Darstellung der Druckverläufe 20, 21 im Einlass- bzw. Auslassbereich eines turbo-aufgeladenen Verbrennungsmotors bei niedrigen Drehzahlen (N = 1.000 min/-1) in Abhängigkeit vom Kurbelwinkel dargestellt. Aus der Darstellung wird deutlich, dass die statischen Drücke allein nicht zur Beschreibung der relevanten Phänomene ausreichen. Es ist ersichtlich, dass der einlassseitige Druck 21 vor dem Einlassventil über die Zeit im wesentlichen konstant ist. Dagegen ist auf der Auslassseite das Auftreten von starken Druckamplituden zu erkennen, die das jeweilige momentane Spülgefälle fundamental beeinflussen. Bei diesen Druckamplituden handelt es sich um die Vorauslassstöße der Zylinder des betrachteten Motors. Das Verbrennungsgas strömt aufgrund des hohen Druckgefälles mit einem hohen Massenstrom in den Auslassbereich, insbesondere in den Abgaskrümmer, sobald das Auslassventile eines Zylinders öffnet. Vor den Auslassventilen der anderen Zylinder steigt der Druck aufgrund von vorhandenen Drosselstelle in der Abgasanlage.

Bezieht man die Auslasseventzeit 22 des Ventils in die Betrachtung ein, ist zu erkennen, dass das Auslassventil gerade dann schließt, wenn der Druck 20 in der Auslassseite sein Maximum erreicht. Dies ist insbesondere in der aufgespreizten Darstellung der Figur 3 deutlich zu erkennen. Zu diesem späten Zeitpunkt wird relativ viel Restgas in den Zylinder zurückgespült. Erfindungsgemäß wird durch eine Verkürzung der Auslasseventlänge das Spülgefälle positiv beeinflusst.

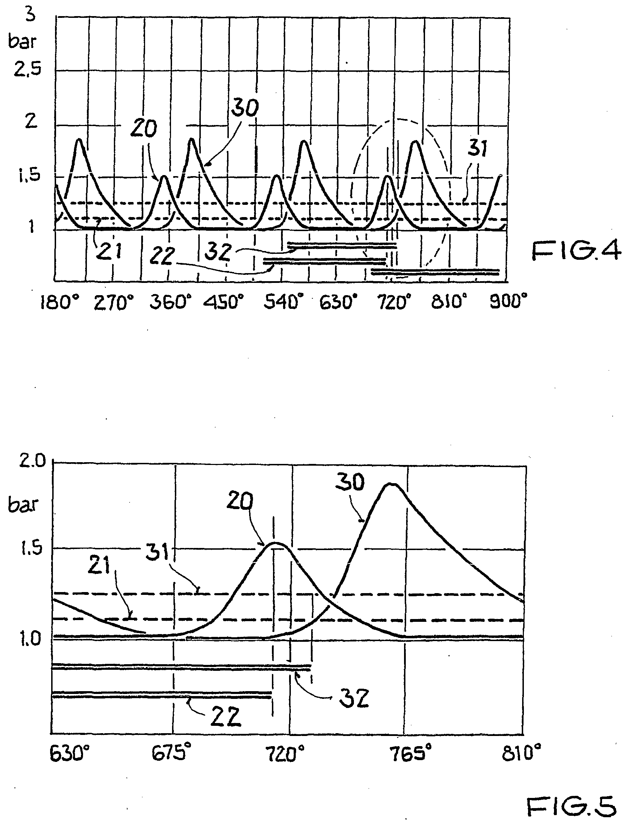

In Figur 4 sind die Druckverläufe 20, 21 im Einlass- bzw. Auslassbereich eines herkömmlichen turbo-aufgeladenen Motors bei Drehzahlen von n=1000 1/min in Abhängigkeit vom Kurbelwinkel dargestellt. Die aufgespreizte Darstellung in Figur 5 zeigt, dass das Auslassventil (siehe Auslasssteuerzeit 22) gerade dann schließt, wenn der Druck auf der Auslassseite sein Maximum erreicht hat. Im Gegensatz dazu wird erfindungsgemäß bei dem hier beschriebenen Verfahren das Auslassventil geschlossen (siehe Auslasssteuerzeiten 32) bevor der Druck in der Auslassseite 30 den Druck auf der Einlassseite 31 übersteigt. Aufgrund des daraus resultierenden positiven Spülgefälles wird der Restgasgehalt reduziert und die Frischladungsmasse erhöht. Dadurch wird dem Abgasturbolader mehr Energie zur Verfügung gestellt, die wiederum zu einer Steigerung des Ladedruckes 31 gegenüber dem Druckniveau 21 führt.

Erfindungsgemäß wird die Auslasseventlänge soweit reduziert, dass eine Entkoppelung der Kommunikation der Zylinder über die Auslassseite realisiert wird. Eine derartige Zündfolgetrennung wird bei einem R4-Motor vorzugsweise bei einer Eventlänge von 180°KW erreicht.

Um eine Ausspülung des Restgases aus dem Zylinder zu ermöglichen, wird ferner eine ausreichend lange Überschneidungsdauer von Ein- und Auslassventilen dargestellt. Vorzugsweise beträgt die Überschneidung zwischen 10° und 25° KW, bezogen auf 1 mm Ventilhub.

Zur Realisierung der verkürzten Eventlänge und der verlängerten Überschneidungsphase bietet sich die Einführung einer zusätzlichen Variabilität bei der Steuerung der Auslassventile an.

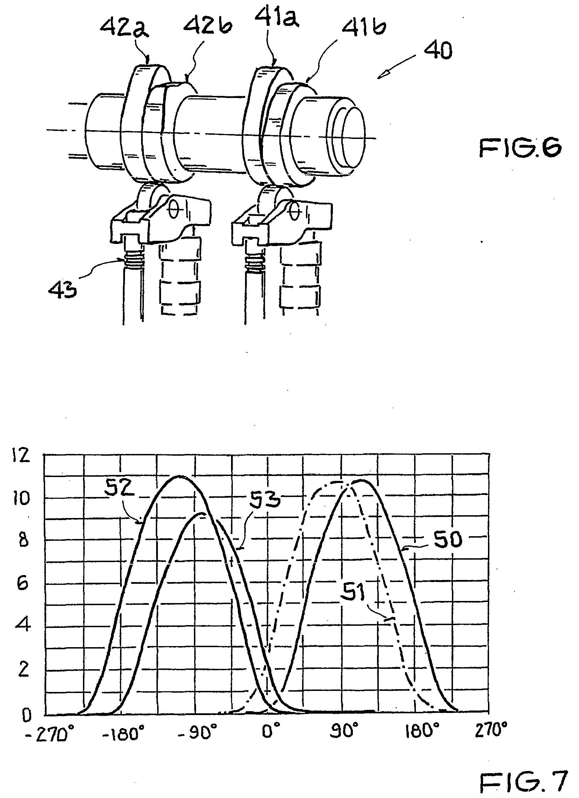

Der erfindungsgemäße Verbrennungsmotor kann, wie in Figur 6 dargestellt, ein Ventilumschaltsystem aufweisen, mit dem die erfindungsgemäße Änderung der Steuerzeiten realisiert werden kann. In Figur 6 ist ein Teil einer Nockenwelle 40 dargestellt, sowie ein erfindungsgemäßer Stufenauslassnocken 41 und 42 (Zylinder mit zwei Auslassventilen). Bei niedrigen Drehzahlen wird von einer Nocke mit einer großen Hubkontur 41 a und 42a auf eine Nocke mit einer kleineren Hubkontur 41b und 42b umgeschaltet. Über einen Schwinghebel 43 wird von den jeweiligen Nocken das zugeordnete Ventil betätigt. Die erfindungsgemäßen Nocken 41a und 41b bzw. 42a und 42b weisen Hubkonturen auf, die gegeneinander verschränkt sind und nicht ineinander liegen. Dadurch lässt sich die erfindungsgemäße notwendige Variation der Auslasseventzeiten ohne einen zusätzlichen auslassseitigen Phasensteller erreichen.

Figur 7 zeigt eine Darstellung der erfindungsgemäßen Steuerzeiten im Vergleich zu konventionellen Steuerzeiten in Abhängigkeit vom Drehwinkel der Kurbelwelle. Im Vergleich zur konventionellen Einlasshubkontur 50 ist die erfindungsgemäße Einlasshubkontur 51 nach früh verschoben, während die erfindungsgemäße Auslasshubkontur 53 im Vergleich zur konventionellen Auslasshubkontur 52 nach spät verschoben ist.

Die Verschiebung der Einlasshubkontur wird sinnvollerweise durch einen Nockenwellensteller realisiert, da eine späte Lage der Einlasshubkontur teilweise Vorteile bei hohen Drehzahlen aufweist.

Das Ventilumschaltsystem ermöglicht die Ausschöpfung aller Potentiale der Verkürzung der Auslasseventzeit und der Verlängerung der Überschneidungsphasevon Ein- und Auslasseventzeit, da die Nachteile im Leerlauf und in der Volllast bei höheren Drehzahlen vermieden werden können.

Die Erfindung ermöglicht die Anhebung des Motordrehmoments bei niedrigen Drehzahlen durch eine Steigerung der Zylinderladung in Folge einer Reduktion der Restgasmasse und einer Verschiebung der Klopfgrenze. Durch die Verkürzung der Auslasseventzeit kann eine Rückspülung vermieden und eine fast ideale Zündfolgetrennung verschiedener Zylinder realisiert werden. Die Restgasausspülung des Brennraums der Zylinder wird durch das positive Spülgefälle in Folge einer Erhöhung der Ventilüberschneidung verbessert. Da die Abgasenergie erhöht wird, kann bei einem turbo-aufgeladenen Verbrennungsmotor der Ladedruck zur nochmaligen Steigerung der Zylinderfüllung erhöht werden. Gleichzeitig ist eine positive Beeinflussung der Zündbedingungen durch eine Senkung der Ladungstemperatur und eine Erhöhung der Durchbrenngeschwindigkeit zu erreichen.

### BEZUGSZEICHENLISTE

- 1: Verbrennungsmotor
- 2: Zylinderbrennraum
- 3: Zylinder
- 4: Kraftstoffzuführung
- 5a: Einlassventil
- 5b: Auslassventil
- 6: Gemischzuführung
- 7: Verdichter
- 8: Abgasvorrichtung
- 9: Abgasturbine
- 10: Katalysator
- 11: Abgasrückführeinrichtung
- 12: Motorsteuergerät
- 13: Sensoren
- 14: Steuermodul
- 20: Druck-Auslassseite (konventionell)
- 21: Druck-Einlassseite (konventionell)
- 22: Auslasseventzeit (konventionell)
- 30: Druck-Auslassseite (erfindungsgemäß)
- 31: Druck-Einlassseite (erfindungsgemäß)
- 32: Auslasseventzeit (erfindungsgemäß)
- 40: Nockenwelle
- 41: Auslassnocke (erfindungsgemäß)
- 41a: Auslassnocke (erfindungsgemäß)
- 41b: Auslassnocke (erfindungsgemäß)
- 42: Auslassnocke (erfindungsgemäß)
- 42a: Auslassnocke (erfindungsgemäß)
- 42b: Auslassnocke (erfindungsgemäß)
- 43: Schwinghebel
- 50: Einlass-Steuerzeit (konventionell)
- 51: Einlass-Steuerzeit (erfindungsgemäß)
- 52: Auslass-Steuerzeit (konventionell)
- 53: Auslass-Steuerzeit (erfindungsgemäß)

## Patentansprüche

1. Verfahren zum Betrieb eines Verbrennungsmotors, welcher zumindest zwei jeweils mit Ein- und Auslassventilen versehene Zylinder aufweist, **dadurch gekennzeichnet, dass** zur Erhöhung der Zylinderfüllung mit Frischgas bei einem Gaswechsel für zumindest einen Zylinder (3) eine Auslasseventzeit und eine Überschneidungsphase von Ein- und Auslasseventzeit gewählt wird, bei der das Auslassventile geschlossen wird, bevor der Druck auf der Auslassseite den Druck auf der Einlassseite übersteigt.

2. Verfahren nach Anspruch 1, **dadurch gekennzeichnet, dass** die Verkürzung der Auslasseventzeit und die Verlängerung der Überschneidungsphase in einem niedrigen Drehzahlbereich vorzugsweise von weniger als 2500 1/min erfolgt.

3. Verfahren nach Anspruch 1 oder 2, **dadurch gekennzeichnet, dass** durch die Verkürzung der Auslasseventzeit eine Zündfolgetrennung der Zylinder realisiert wird.

4. Verfahren nach zumindest einem der vorhergehenden Ansprüche, **dadurch gekennzeichnet, dass** Auslasseventzeit derart bemessen ist, dass das Auslassventil bei einem positiven Spülgefälle zwischen Zylinder (3) und Einlassseite des Zylinders (3) schließt.

5. Verfahren nach zumindest einem der vorhergehenden Ansprüche, **dadurch gekennzeichnet, dass** der Verbrennungsmotor (1) einen Abgasturbolader (7, 9) aufweist.

6. Verfahren nach zumindest einem der vorhergehenden Ansprüche, **dadurch gekennzeichnet, dass** ein erhöhter Abgasdruck auf der Auslassseite des Zylinders (3) vorgesehen ist.

7. Verfahren nach Anspruch 5 oder 6, **dadurch gekennzeichnet, dass** ein zumindest nach Schließung des Auslassventils (5b) auftretender erhöhter Druck auf der Auslassseite des Zylinders (3) zur Erhöhung des vom Abgasturbolader (7, 9) erzeugten Ladedrucks auf der Einlassseite herangezogen wird.

8. Verfahren nach zumindest einem der vorhergehenden Ansprüche, **dadurch gekennzeichnet, dass** bei einem R4-Motor eine Auslasseventzeit von 180°KW ± 10°KW vorgesehen ist.

9. Verfahren nach zumindest einem der vorhergehenden Ansprüche, **dadurch gekennzeichnet, dass** die Überschneidungsphase eine Länge zwischen 5° und 30°KW bezogen auf 1 mm Ventilhub hat.

10. Verfahren nach zumindest einem der vorhergehenden Ansprüche, **dadurch gekennzeichnet, dass** im Teillastbereich zwischen Nulllast und entdrosseltem Betrieb eine Erhöhung der internen Abgasrückführung durch die Erhöhung der Überschneidungsdauer zwischen Ein- und Auslassventil realisiert werden kann.

11. Verfahren nach zumindest einem der vorhergehenden Ansprüche, **dadurch gekennzeichnet, dass** durch die Erhöhung der Zylinderfüllung mit Frischgas der Verbrennungsmotor mit einer um etwa 50 K reduzierten Ladungstemperatur betrieben wird.

12. Verfahren nach zumindest einem der vorhergehenden Ansprüche, **dadurch gekennzeichnet, dass** durch die Senkung des Restgasgehaltes die Durchbrenngeschwindigkeit erhöht wird.

13. Verfahren nach zumindest einem der vorhergehenden Ansprüche, **dadurch gekennzeichnet, dass** durch die reduzierte Ladungstemperatur die Klopfgrenze des Motors positiv beeinflusst wird.

14. Verfahren nach zumindest einem der vorhergehenden Ansprüche, **dadurch gekennzeichnet, dass** zur Steuerung des Auslassventils (5b) eine Nockenwelle vorgesehen ist und die Verkürzung der Auslasseventzeit und die Verlängerung der Überschneidungsphase mittels eines zugeordneten Auslassnockenwellenprofils erfolgt.

15. Verbrennungsmotor mit zumindest zwei mit Ein- und Auslassventilen versehenen Zylindern, **dadurch gekennzeichnet, dass** ein Steuermodul (14) vorgesehen ist, welches zur Erhöhung der Zylinderfüllung mit Frischgas während des Gaswechsels die Auslasseventzeit verkürzt und die Überschneidungsphase von Ein- und Auslassventilen verlängert, bei der das Auslassventil geschlossen wird, bevor der Druck auf der Auslasseite den Druck auf der Einlassseile übersteigt.

16. Verbrennungsmotor nach Anspruch 15, **dadurch gekennzeichnet, dass** zur Steuerung des Auslassventils (5a) eine Nockenwelle (40) vorgesehen ist und die Verkürzung der Auslasseventzeit und die Verlängerung der Überschneidungsphase mittels eines zugeordneten Auslassnockenwellenprofils erfolgt.

17. Verbrennungsmotor nach zumindest einem der Ansprüche 15 oder 16, **dadurch gekennzeichnet, dass** zur Steuerung des Einlassventils (5a) eine Nockenwelle vorgesehen ist und zur Verlängerung der Überschneidungsphase der Öffnungsbeginn des Einlassventils (5a) durch Phasenverschiebung um 30° ± 5°KW früher erfolgt als bei konventionellen Systemen.

## Claims

1. Method of operating an internal combustion engine having at least two cylinders, each having inlet and exhaust valve, **characterised in that**, to increase the filling of the cylinder with fresh gas, for at least one cylinder (3), an exhaust event time and an overlap phase of inlet and exhaust event times are chosen, in which the exhaust valve is closed before the pressure on the exhaust side exceeds the pressure on the inlet side

2. Method according to claim 1, **characterised in that** the shortening of the exhaust event time and the lengthening of the overlap phase takes place in a low engine speed range, preferably lower than 2,500 r.p.m.

3. Method according to claim 1 or 2, **characterised in that** the shortening of the exhaust event time results in the cylinder being taken out of the firing sequence.

4. Method according to at least one of the previous claims, **characterised in that** the exhaust event is so timed that the exhaust valve closes when there is a positive scavenge pressure drop between the cylinder (3) and the inlet side of the cylinder (3).

5. Method according to at least one of the previous claims, **characterised in that** the internal combustion engine (1) includes an exhaust turbo-charger (7, 9).

6. Method according to at least one of the previous claims, **characterised in that** provision is made for an increased exhaust pressure on the exhaust side of the cylinder (3).

7. Method according to claim 5 or 6, **characterised in that** an increased pressure on the exhaust side of the cylinder (3) arising at least after the closing of the exhaust valve (5b) leads to an increase in the charge pressure generated on the inlet side by the exhaust turbo-charger (7, 9).

8. Method according to at least one of the previous claims, **characterised in that**, in a straight 4 engine, provision is made for an exhaust event time of 180° ± 10° crank angle.

9. Method according to at least one of the previous claims, **characterised in that**, the overlap phase has a length of between 5° and 30° crank angle referred to 1-mm valve lift.

10. Method according to at least one of the previous claims, **characterised in that**, in the partial load range between no load and unthrottled operation, an increase in the internal exhaust gas recirculation can be achieved by increasing the length of overlap between the inlet and exhaust valves.

11. Method according to at least one of the previous claims, **characterised in that**, by increasing the filling of the cylinder with fresh gas, the internal combustion engine can be operated with a charge temperature reduced by about 50 K.

12. Method according to at least one of the previous claims, **characterised in that**, by reducing the residual gas content, the flame front velocity is increased.

13. Method according to at least one of the previous claims, **characterised in that** the knock threshold of the engine is positively influenced by the reduced charge temperature.

14. Method according to at least one of the previous claims, **characterised in that** a cam shaft is provided to control the exhaust valve (5b) and the shortening of the exhaust event time and the lengthening of the overlap phase is achieved by means of an appropriate exhaust cam profile.

15. Internal combustion engine with at least two cylinders equipped with inlet and exhaust valves, **characterised in that** a control module (14) is provided that, to increase the filling of the cylinder with fresh gas during the gas exchange, shortens the exhaust event time and lengthens the overlap phase of the inlet and exhaust valves, in which the exhaust valve is closed before the pressure on the outlet side exceeds the pressure on the inlet side.

16. Internal combustion according to claim 15, **characterised in that** a cam shaft (40) is provided to control the exhaust valve (5a) and the shortening of the exhaust event time and the lengthening of the overlap phase is achieved by means of an appropriate exhaust cam profile.

17. Internal combustion according to at least one of claims 15 or 16, **characterised in that** a cam shaft is provided to control the inlet valve (5a) and the lengthening of the overlap phase is achieved by phase-shifting the start of inlet valve (5a) opening earlier than in conventional systems by 30° ±5° crank angle.

## Revendications

1. Procédé de fonctionnement d'un moteur à combustion interne qui comporte au moins deux cylindres munis chacun de soupapes d'admission et d'échappement, **caractérisé en ce que**, pour augmenter le remplissage des cylindres en gaz frais lors d'un échange de gaz, on choisit pour au moins un cylindre (3) un temps d'échappement et une phase de chevauchement de temps d'admission et de temps d'échappement pour lesquels la soupape d'échappement est fermée avant que la pression du côté de l'échappement dépasse la pression du côté de l'admission.

2. Procédé selon la revendication 1, **caractérisé en ce que** la réduction du temps d'échappement et la prolongation de la phase de chevauchement s'effectuent dans une plage de vitesse de rotation basse, de préférence de moins de 2 500 tr/min.

3. Procédé selon la revendication 1 ou 2, **caractérisé en ce qu'**une séparation d'ordre d'allumage des cylindres est réalisée grâce à la réduction du temps d'échappement.

4. Procédé selon au moins l'une des revendications précédentes, **caractérisé en ce que** le temps d'échappement est dimensionné de telle sorte que la soupape d'échappement est fermée pour un gradient de balayage positif entre le cylindre (3) et le côté admission du cylindre (3).

5. Procédé selon au moins l'une des revendications précédentes, **caractérisé en ce que** le moteur à combustion interne (1) comporte un turbocompresseur (7, 9).

6. Procédé selon au moins l'une des revendications précédentes, **caractérisé en ce qu'**une pression de gaz d'échappement accrue est prévue du côté de l'échappement du cylindre (3).

7. Procédé selon la revendication 5 ou 6, **caractérisé en ce qu'**une pression accrue apparaissant au moins après la fermeture de la soupape d'échappement (5b) du côté de l'échappement du cylindre (3) est exploitée pour augmenter la pression de suralimentation produite par le turbocompresseur (7, 9) du côté de l'admission.

8. Procédé selon au moins l'une des revendications précédentes, **caractérisé en ce que**, pour un moteur à 4 cylindres en ligne, un temps d'échappement de 180°vil. ± 10°vil. est prévu.

9. Procédé selon au moins l'une des revendications précédentes, **caractérisé en ce que** la phase de chevauchement a une longueur comprise entre 5° et 30°vil. par rapport à 1 mm de levée de soupape.

10. Procédé selon au moins l'une des revendications précédentes, **caractérisé en ce que**, dans la plage de charge partielle entre la charge nulle et le fonctionnement débridé, une augmentation du retour de gaz d'échappement interne peut être réalisée grâce à l'augmentation de la durée de chevauchement entre soupape d'admission et soupape d'échappement.

11. Procédé selon au moins l'une des revendications précédentes, **caractérisé en ce que**, par l'augmentation du remplissage des cylindres avec du gaz frais, le moteur à combustion interne fonctionne avec une température de charge réduite d'environ 50K.

12. Procédé selon au moins l'une des revendications précédentes, **caractérisé en ce que**, par la baisse de la teneur en gaz résiduels, la vitesse de combustion est augmentée.

13. Procédé selon au moins l'une des revendications précédentes, **caractérisé en ce que**, par la température de charge réduite, la limite de cliquetis du moteur est influencée positivement.

14. Procédé selon au moins l'une des revendications précédentes, **caractérisé en ce que**, pour la commande de la soupape d'échappement (5b), un arbre à cames est prévu et la réduction du temps d'échappement ainsi que la prolongation de la phase de chevauchement s'effectuent au moyen d'un profil d'arbres à cames d'échappement associé.

15. Moteur à combustion interne avec au moins deux cylindres munis de soupapes d'admission et d'échappement, **caractérisé en ce qu'**il est prévu un module de commande (14) qui, pour augmenter le remplissage des cylindres en gaz frais pendant l'échange dé gaz, réduit le temps d'échappement et prolonge la phase de chevauchement des soupapes d'admission et d'échappement lors de laquelle la soupape d'échappement est fermée avant que la pression du côté de l'échappement dépasse la pression du côté de l'admission.

16. Moteur à combustion interne selon la revendication 15, **caractérisé en ce que**, pour commander la soupape d'échappement (5a), il est prévu un arbre à cames (40) et la réduction du temps d'échappement ainsi que la prolongation de la phase de chevauchement s'effectuent au moyen d'un profil d'arbres à cames d'échappement associé.

17. Moteur à combustion interne selon au moins l'une des revendications 15 ou 16, **caractérisé en ce que**, pour commander la soupape d'admission (5a), il est prévu un arbre à cames et, pour prolonger la phase de chevauchement, le début d'ouverture de la soupape d'admission (5a) s'effectue grâce à un déphasage de 30° ± 5°vil. plus tôt que dans le cas de systèmes conventionnels.
